# EUROPEAN PATENT SPECIFICATION

(11) **EP 2 345 267 B1**
(45) Date of publication and mention of the grant of the patent: **29.08.2018**
(21) Application number: 09817345.3
(22) Date of filing: 30.09.2009
(51) Int. Cl.: H04W 8/20, G06F 17/30, H04M 1/2745, H04M 3/493, H04L 29/08, H04L 29/12, H04L 12/58, G06Q 10/10

(54) **METHOD AND APPARATUS FOR ADDRESS BOOK CONTACT MANAGEMENT**
VERFAHREN UND VORRICHTUNG ZUR VERWALTUNG VON ADRESSBUCHINHALTEN
PROCÉDÉ ET APPAREIL POUR LA GESTION DES CONTACTS D UN CARNET D ADRESSES

(30) Priority: 30.09.2008 US 101618 P; 15.10.2008 US 105741 P
(43) Date of publication of application: 20.07.2011
(73) Proprietor: Nokia Technologies Oy, 02610 Espoo (FI)
(72) Inventor: NGUYENPHU, Thinh, Southlake TX 76092 (US); MOSTAFA, Miraj, 33820 Tampere (FI)
(74) Representative: Papula Oy
(86) International application number: PCT/IB2009/007011
(87) International publication number: WO 2010/038142

(56) References cited:
- WO-A1-2008/069240
- WO-A2-2007/089415
- US-A1- 2002 116 396
- US-A1- 2002 156 895
- US-A1- 2006 229 063
- US-A1- 2007 038 720
- US-A1- 2007 129 959
- US-A1- 2008 147 685

## Description

### FIELD OF INVENTION

This invention relates to electronic address books. In particular, the present invention relates to updating of contacts in such address books.

### BACKGROUND OF THE INVENTION

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Address books are referred to in the industry by various names, such as phonebook, contacts, etc. A Network Address Book (NAB) is an address book stored in a network. The Open Mobile Alliance (OMA) is in the process of standardizing an NAB in terms of a Converged Address Book (CAB).

With such standardization, CAB may define a network repository for the own contact information of a user, referred to as a Personal Contact Card (PCC). A user is expected to maintain and update his/her PCC in the network. The repository of the PCC's of various users is referred to herein as a PCC Server.

It is a common practice to send contact information to one or more recipients. The sending is variously referred to as a "send" operation, e.g. "provide", "exchange", "share". As the action is called "Contact Share" in OMA for CAB, both the terms share and send are used here to address the action. In this regard, any contact information from an address book is sent to a device or a network repository of a user of interest. The contact information being sent may be part or full contact information of the sender or any number of contact entries of the address book owned by the sender. Further, the information sent may include contact information of any number of entries of the address book. Thus, in one case, the entire address book may be sent.

Reference publication WO 2008/069240 discloses a method wherein calling terminal information is updated. The updated information is collectively distributed to receiving side terminal apparatuses. The calling terminal transmits updated information to a server. The server extracts address books including the information of the calling terminal. The server distributes the updated information of the calling terminal apparatus collectively to telephone numbers of users of the extracted address books. Thus, in WO 2008/069240 the technical problem is that of ensuring that all copies of calling terminal information are updated.

Reference publication WO 2007/089415 also discloses a method for publishing contact information. In the method, there is received by a server, a command to publish a collection of contacts to a plurality of recipients. The collection of contacts is associated with a network address book of a sender. The sender specifies a distribution list and sends it to the server. The server sends a notification to the plurality of recipients. The notification acts as an invitation for a recipient to decide whether the recipient wishes to receive the collection of contacts. If the recipient accepts, the collection is sent to the recipient.

Reference publication US 2002/0116396 also discloses a method for providing current information to authorized individuals. An originating user provides an initial version to a receiving user. Changes to the initial version are stored at an accessible network site. The receiving user periodically accesses the accessible network site to obtain a current version.

### SUMMARY OF THE INVENTION

According to a first aspect of the invention, the invention is a method. The method comprises: receiving, at an apparatus, by a computer code included in a memory unit communicatively connected to a processor, a notification to share contact information for a contact in an address book of a sender with a recipient, the notification including an address for the recipient, an address for the sender and a pointer to the contact information to be shared, the receiving of the notification being in response to an update to a contact share document; retrieving the contact information for the contact from a personal contact card server or a network repository of address book by a computer code included in the memory unit; causing delivery of the contact information to the recipient by a computer code included in the memory unit; and updating a contact share status upon successful delivery of the contact information to the recipient by a computer code included in the memory unit, wherein the updating of the contact share status includes updating an XML Document Management document, wherein the updating of the XML Document Management document includes updating a recipient subscription list with a contact share flag.

According to a second aspect of the invention, the invention is an apparatus. The apparatus comprises a processor; and a memory unit communicative connected to the processor and including: computer code for receiving, at the apparatus, a notification to share contact information for a contact in an address book of a sender with a recipient, the notification including an address for the recipient, an address for the sender and a pointer to the contact information to be shared, the receiving of the notification being in response to an update to a contact share document; computer code for retrieving the contact information for the contact from a personal contact card server or a network repository of address book; computer code for causing delivery of the contact information to the recipient; and computer code for updating a contact share status upon successful delivery of the contact information to the recipient, wherein the updating of the contact share status includes updating an XML Document Management document, wherein the updating of the XML Document Management document includes updating a recipient subscription list with a contact share flag.

According to a third aspect of the invention, the invention is a computer program product, embodied on a computer-readable medium, comprising computer code that when executed performs the method.

In one embodiment, the notification includes an address for the recipient and an address for the sender. The notification may further include the contact information to be shared. The notification may include a pointer to the contact information to be shared. The contact information to be shared may be indicated by the address for the sender.

In one embodiment, the receiving a notification is in response to an update to a contact share document. The contact share document may be an XML Document Management document.

In one embodiment, the method further comprises updating a contact share status upon successful delivery of the contact information to the recipient. The updating a contact share status may include updating an XML Document Management document. The updating an XML Document Management document may include updating a recipient subscription list with a contact share flag. The method may further comprise sending a notification to the sender when the subscription list XML document is updated.

In one embodiment, the retrieving the contact information includes retrieving the contact information from a personal contact card server or a network repository of address book.

In one embodiment, the delivering the contact information includes transporting the contact information to a remote domain.

In one embodiment, the method further comprises updating a network address book with the contact information.

In one embodiment, the method further comprises receiving a reject or accept from the recipient indicating whether the recipient rejects or accepts the contact information.

These and other advantages and features of various embodiments of the present invention, together with the organization and manner of operation thereof, will become apparent from the following detailed description when taken in conjunction with the accompanying drawings.

### BRIEF DESCRIPTION OF THE DRAWINGS

Example embodiments of the invention are described by referring to the attached drawings, in which:
Figure 1 is a schematic illustration of an exemplary architecture and flow of an address book management system according to an embodiment of the present invention;
Figure 2 is a schematic illustration of an exemplary architecture of an address book update system according to an embodiment of the present invention;
Figure 3 is a flowchart illustrating an exemplary contact information share process in accordance with embodiments of the present invention;
Figure 4 illustrates an exemplary information flow for a recipient in a local domain in accordance with embodiments of the present invention using an XDM-based method;
Figure 5 illustrates an exemplary information flow for a recipient in a remote domain in accordance with embodiments of the present invention using an XDM-based method;
Figure 6 is a schematic illustration of an exemplary architecture and flow of an address book management system according to another embodiment of the present invention;
Figure 7 illustrates an exemplary information flow for a recipient in accordance with embodiments of the present invention using an SIP Push-based method;
Figure 8 is an overview diagram of a system within which various embodiments of the present invention may be implemented;
Figure 9 illustrates a perspective view of an example electronic device which may be utilized in accordance with the various embodiments of the present invention; and
Figure 10 is a schematic representation of the circuitry which may be included in the electronic device of Figure 9.

### DETAILED DESCRIPTION OF THE VARIOUS EMBODIMENTS

In the following description, for purposes of explanation and not limitation, details and descriptions are set forth in order to provide a thorough understanding of the present invention. However, it will be apparent to those skilled in the art that the present invention may be practiced in other embodiments that depart from these details and descriptions.

Currently, there is no standardized solution for sending contact information from a sender to a recipient, resulting in poor user experience. For example, different vendors and different implementations may use different transport mechanism (e.g., messaging services such as SMS, MMS) for sending contact information, and a user or device may not always be aware of the fact that contact information is hidden in a transport payload.

Further, sending contact information from a local copy in a device typically requires over-the-air transport of the whole contact information being sent. The mobile terminal may also need to process the information (e.g., encode/encrypt, decode/decrypt). This may exacerbate existing power management and corresponding delay issues.

In accordance with embodiments of the present invention, an extension of OMA XML Document Management (XDM) provides a solution for sharing contact information.

As used herein, a "contact" may refer to a person or an entity corresponding to contact information.

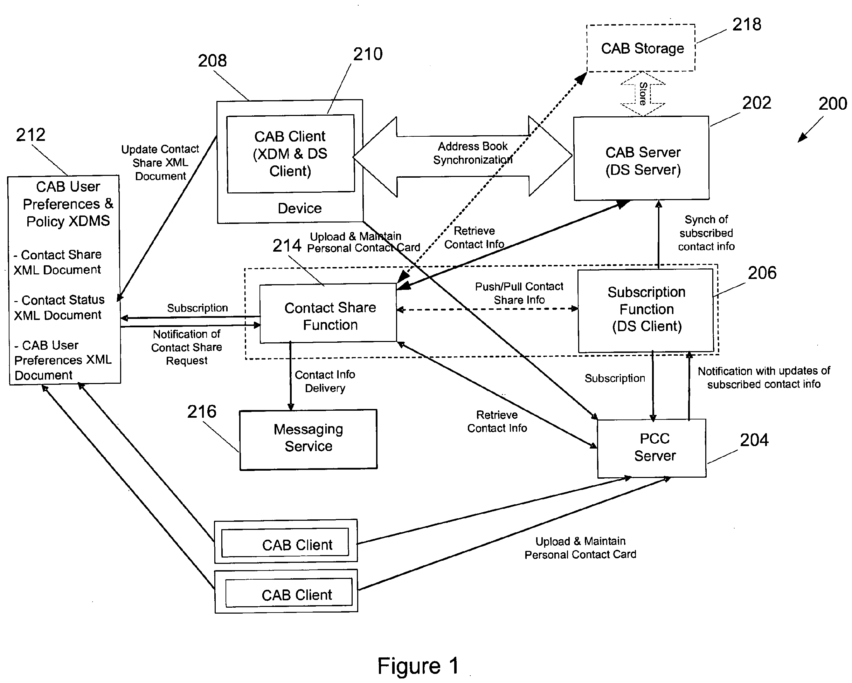

Embodiments of the present invention provide an efficient and reliable system, apparatus and method for sending contact information. Referring now to Figure 1, an exemplary architecture and flow of an address book management system according to an embodiment of the present invention is schematically illustrated. The address book update system 200 includes a CAB server 202 configured to function as a server for the address book of a user. In one embodiment, as illustrated in parentheses in Figure 1, the CAB server 202 includes the functionality of an OMA data synchronization (DS) server. The CAB Server 202 may store the address book with itself. Alternatively, the address book may be stored in a separate storage, such as a CAB Storage 218 as illustrated in the embodiment of Figure 1. The CAB Storage 218 can be based on XDMS (i.e., Address Book XDMS). A CAB client 210 is provided in a user device 208 to maintain both the address book of the user in the CAB server 202 and the personal contact card of the user in a PCC Server 204. In the illustrated embodiment, the CAB client 210 also includes the functionality of a DS client. The CAB client 210 further includes XML Document Management (XDM) client functionality. As exemplarily illustrated in Figure 1, the address book management system 200 may be configured to accommodate any number of CAB clients.

An interface may be provided between the CAB client 210 and the CAB server 202. This interface may be configured to support the data synchronization between the CAB client 210 and the CAB server 202 and may support the following functions:
1) data synchronization protocol of the CAB;
2) CAB management function such as add, delete, update of the CAB; and
3) mutual authentication with the CAB client 210.

A Personal Contact Card (PCC) server 204 is provided to manage and store PCC of various users.

In accordance with embodiments of the present invention, a subscription function (SF) 206 is provided between the CAB server 202 and the PCC server 204. The SF 206 may be a stand-alone network entity, or may be included within any other network entity. In accordance with embodiments of the present invention, synchronization of the address book is performed between the CAB client 210 and the CAB server 202.

In the embodiment of Figure 1, the system further includes a User Preference & Policy (UPP) server 212. In various embodiments, the UPP server 212 includes various documents configured as XML Document Management (XDM) documents. In this regard, the UPP server 212 may be an XDM server (XDMS). While the UPP server 212 is illustrated in Figure 1 as a single entity, in various embodiments, the UPP server 212 may include multiple entities to perform various functions (e.g., a dedicated entity might be used for each document it handles).

In accordance with embodiments of the present invention, the UPP XDMS 212 stores and manages a Contact Share XML document for each user. The Contact Share XML document is a document by which a user (e.g., the CAB client 210) may indicate with whom certain contact information is to be shared. In various embodiments, the Contact Share XML document has at least "To:" and "From" fields. The format of the "To" and "From" fields may be a telephone number, an email address, a Network Access Identifier (NAI) or the like. Further, in other embodiments, the Contact Share XML document may include the actual contact share information or a reference to the information. For example, a Contact field may either contain full contact information to be shared or just an identifier of the contact entry and a corresponding attribute or parameter (without any value) as a reference. Contact share information may not be required when PCC data of the sender (i.e., the "From" field) is to be shared. Of course, it will be understood by those skilled in the art that the names of the fields (e.g., "To", "From", and "Contact") described above are merely provided as examples. The exact names of the field may be different in a standard and in various implementations.

In various embodiments, the contact information may include part or full information about one or more contact entries in an address book of the sending user and/or part or the full information of Personal Contact Card of the sending user. In some embodiments, the contact information and/or the recipient information may include a pointer to the contact information and/or the recipient address.

The UPP XDMS 212 may also store and manage a Contact Status XML document. The Contact Status XML document is a document indicating the status of a Contact Share operation or any other CAB operation to the user, or the CAB client 210.

The UPP XDMS 212 may also store and manage CAB User Preferences XML documents. The CAB User Preferences XML documents include a list of properties or attributes of the contact entries and the list of contact entries (i.e. subscription list) to which a CAB client wants to subscribe. For example, the CAB User Preferences XML document may include a subscription list. Further, the CAB User Preferences XML document may include personalization preferences for the CAB client 210.

In accordance with embodiments of the invention, as illustrated in Figure 1, the system 200 includes a network entity, a Contact Share Function 214, configured to manage the sharing of contact information. The Contact Share Function 214 is configured to support address resolution, resolve the recipient type and recipient domain and to provide a messaging function to share the contact information. The Contact Share Function 214 has full access to the XML documents in the UPP XDMS 212, the Personal Contact Card Server 204 and the CAB Server 202. At the time of CAB service provisioning, the Contact Share Function 214 subscribes to the user Contact Share XML document in UPP XDMS 212.

As illustrated in Figure 1, in certain embodiments, the SF 206 may be provided with DS client functionality to interface with the CAB Server 202 having DS server functionality. In other embodiments, the SF 206 may be provided as a functionality of the CAB Server 202. In still other embodiments, the SF 206 and the CAB Server 202 may be grouped with the Contact Share Function 214 as a single network entity.

In accordance with embodiments of the present invention, the Contact Share Function 214 receives a notification when the Contact Share XML document in the UPP XDMS 212 is updated by a CAB Client 210. The Contact Share Function 214 is further configured to retrieve the contact information from, for example, the PCC Server 204 and the CAB Server 202. As an example, upon receiving the notification, the Contact Share Function 214 may retrieve the PCC of the sender from PCC Server (e.g., using an XCAP operation) if the "Contact" field is not available in the contact share request. If the "Contact" field exists and it includes a reference to an entry, the Contact Share Function 214 retrieves the contact information of the entry from the CAB Storage 218. The XCAP operation may also be used here if the CAB Storage is an XDMS (e.g., Address Book XDMS). Alternatively, the Contact Share Function 214 may directly retrieve the shared contact information from the CAB Server using synchronization. Here, the Contact Share Function 214 may use the functionality of a DS Client and, using DS filtering, can provide means for retrieving specific contact information. If the "Contact" field includes the shared contact information instead, the retrieval operation is not required. Note that this retrieval operation may not be required if the shared contact information is available in the PCC Server 204 and the recipient is a CAB user, as described below. The Contact Share Function 214 may be a stand-alone network entity, or it may be part of any other network entity, such as, for example, the Subscription Function 206.

In one embodiment, a messaging service 216 is configured to provide delivery of the contact information to the recipient address if the recipient is not a CAB user. Example messaging services that can be used are SMS, MMS, IM, E-mail. In other embodiments, any other transport or service may be used for delivery of the contact information to the non-CAB user recipient provided that the transport/service provides the necessary means for delivery. For example, protocols such as SIP, HTTP can be used in this regard with some definition of payload and the values of some headers. When the SIP protocol is used, the MESSAGE method may be used.

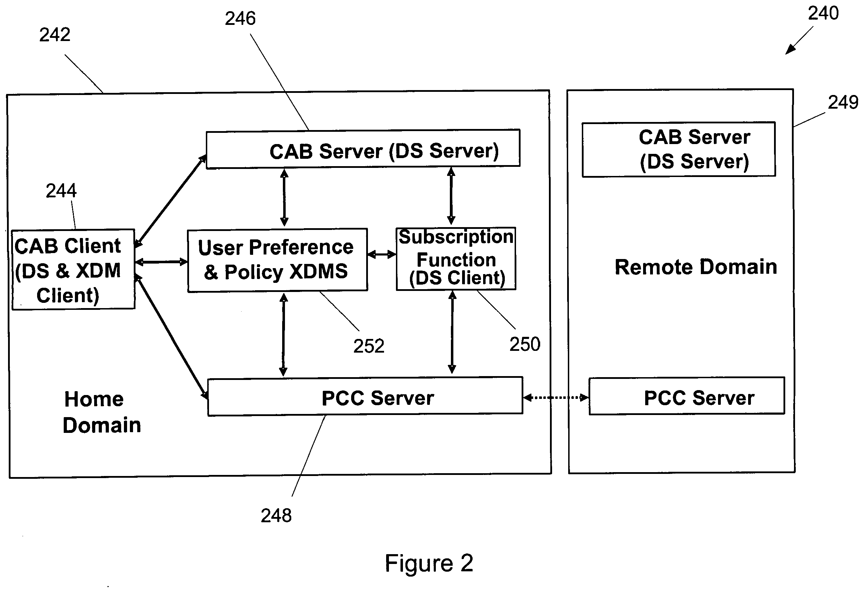

Referring now to Figure 2, another exemplary embodiment of an address book management system is illustrated. In the illustrated system 240, a CAB client 244, a CAB server 246, a PCC server 248, and an SF 250 are provided in a home domain 242, similar to the embodiment described above with reference to Figure 1. The system 240 further includes a UPP server 252, such as the UPP XDMS of Figure 1. In the embodiment illustrated in Figure 2, the system 240 further includes a remote domain 249. Thus, it is possible that all of the subscribed users do not belong to the home domain.

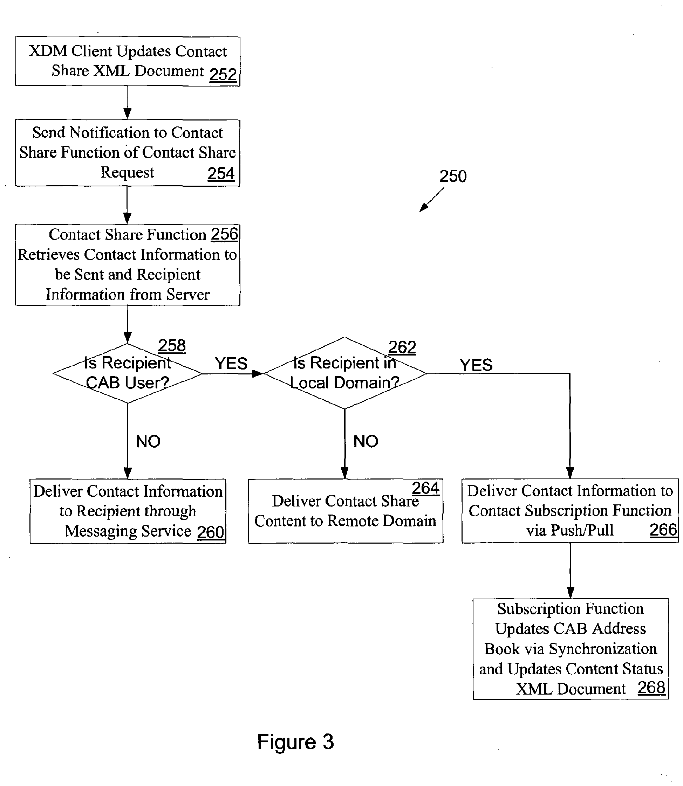

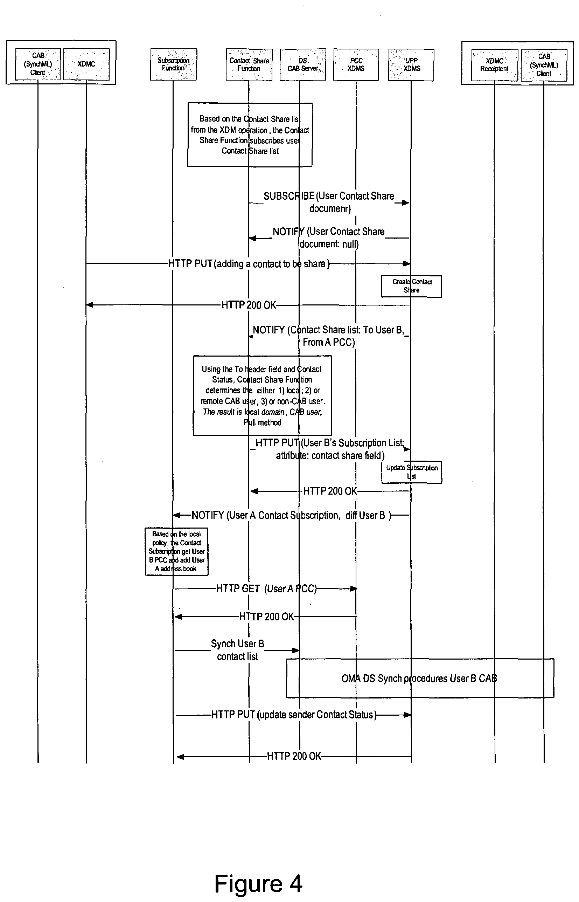

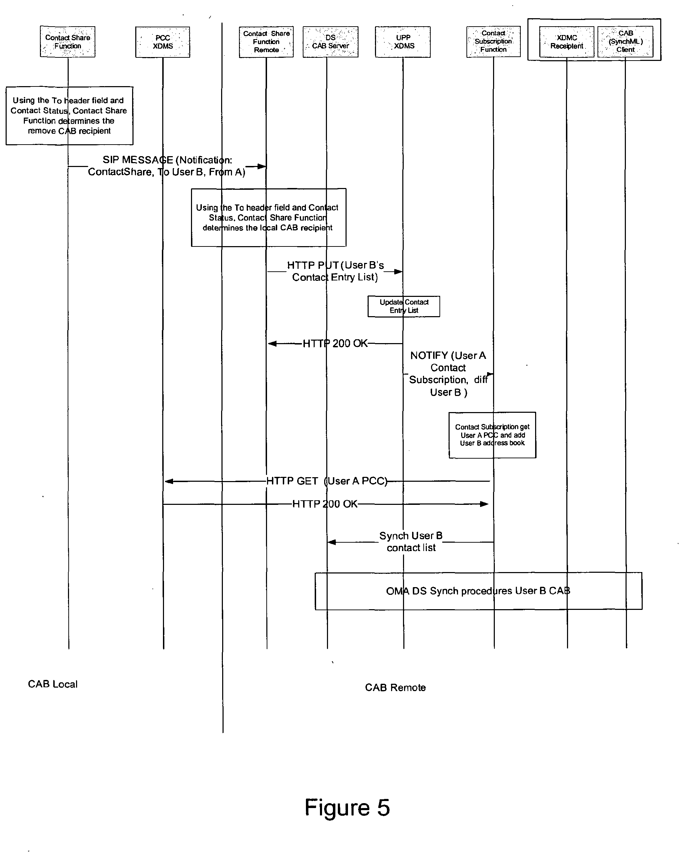

Referring now to Figures 3-5, a process for sharing contact information in accordance with embodiments of the present invention is illustrated. In this regard, Figure 3 is a flow chart illustrating an exemplary process in accordance with embodiments of the present invention. Figure 4 illustrates an exemplary information flow for the case where the recipient is in the local domain, while Figure 5 illustrates an exemplary information flow for the case where the recipient is in a remote domain.

Referring now to Figure 3, in accordance with embodiments of the present invention, when a user (e.g., CAB client) wishes to share his own contact information or the contact information of someone else from his own address book, the user uses XDM Client to update the To, From, and Contact field of the Contact Share XML document in the UPP XDMS (block 252). Upon a successful completion of a Contact Share procedure, either the Contact Share Function or the XDM Client of the user device clears the content in the Contact Share XML document.

Upon successful updating of the Contact Share XML document in the UPP XDMS, the Contact Share Function receives a notification of the pending or new Contact Share request (block 254). The notification includes the content of the Contact Share request. The Contact Share Function then retrieves the corresponding contact information (block 256). As noted above, the contact information to be shared may be that of the sender or of another entity in the senders address book. If the Contact field includes a reference, the contact information is retrieved from the CAB Server or the PCC Server, as described above. If the Contact field is missing, the Contact Share Function assumes that the PCC data of the sender is to be shared.

Further, the Contact Share Function may resolve the "To" address field to determine whether the recipient is in the local domain or in a remote domain. The Contact Share Function may further resolve the type of recipient to determine whether the recipient is a CAB user or a non-CAB user, for example. The Contact Share Function may use local service Contact Status or other local service provisioning database to determine the type of recipient.

Thus, at block 258, the Contact Share Function determines whether the user is a CAB user or a non-CAB user. If the user is determined to be non-CAB user, the Contact Share Function may use a messaging service (e.g., SMS, MMS, IM, e-mail) or a suitable transport protocol (e.g., SIP MESSAGE method) to send the contact information to the recipient (block 260), as described above with reference to Figure 1. For example, the "To" and "From" fields of the Contact Share document map to the recipient and the sender of the message, while the Contact (in case contact information of an entry of address book is shared) or From field (in case PCC data is shared) maps to the content of the message. In this case, the Contact Share Function retrieves contact information before creating the message or transport data unit, as described above. Thus, the Contact Share Function may update the user Contact Status XML document to indicate that the contact share has sent the contact information.

If, on the other hand, the determination is made at block 258 that the recipient is a CAB user, the Contact Share Function determines whether the recipient is in the local domain or in a remote domain (block 262). If the determination is made at block 262 that the recipient is in the local domain, the Contact Share Function delivers the contact share information to the Contact Subscription Function (block 266). Reference may be made to Figure 4 for an exemplary information flow for this case.

The Contact Share Function uses either a push or a pull method to deliver the contact share information to the Contact Subscription Function. In a pull method according to various embodiments of the present invention, the actual contact share content is not transported to the CAB system until the Subscription Function fetches the content. This method is similar to content indirect delivery. The pull method may be useful when the contact maintains his/her PCC in the PCC server. In the pull method, the Contact Share Function may update the recipient subscription list XML document with a contact share flag to the UPP XDMS 212. The CAB Client 210 receives a notification when the subscription list XML document is updated by the UPP XDMS 212.

In a push method according to various embodiments of the present invention, the Contact Share Function pushes the contact share information to the Subscription Function. The push method may be useful when the contact does not maintain his/her PCC in a PCC server.

In this regard, the pull method may be advantageous since the contact share is recorded in the subscription list and tracked. Thus, in the event of any failure, the Subscription Function may be able to retrieve the contact share. Further, the recipient may review the contact share status and/or the subscription list prior to synchronization to the recipient address book. This option provides the recipient the ability to accept or reject the contact share information prior to synchronization with the address book. If the recipient rejects the contact share information, then the recipient uses the XDM Client update the XML document of the subscription list. An advantage of the push method is that it requires fewer operations in the network.

Upon delivery of the contact information to the Subscription Function, the Subscription Function updates the CAB address book via synchronization and may update the Contact Status XML document in the UPP XDMS (block 268). In the case of the pull method, the Contact Share Function updates the subscription list in the UPP XDMS by including either the "From" (if sender's own information is shared) or "Contact" (if contact information of an entry of the address book of the sender is shared) field. In various embodiments, an attribute field is provided in the subscription list. The attribute field may be used for tracking and/or differentiating between the user's own subscription list and contact share subscription.

The Subscription Function may receive an update of the subscription list from the UPP XDMS. The Subscription Function processes the notification and fetches the PCC contact information from the PCC XDMS. The Subscription Function may further update the user's CAB address book via synchronization, and updates the sender Contact Status XML document.

In the case of the push method, the Contact Share Function pushes the contact share information to the Subscription Function. The Subscription Function then updates the user's CAB address book via synchronization and updates the sender Contact Status XML document.

Updating of the sender Contact Status XML document in the UPP XDMS may indicate to the sender that the Contact Share operation has been completed. It may not, however, indicate that the recipient accepted the contact share.

In various embodiments, the Contact Share Function may monitor the sender Contact Status XML document. When the sender Contact Status XML document shows that the contact share is completed, the Contact Share Function may update the subscription list by clearing the contact entry with the special field. If the Contact Share operation failed with multiple attempts, the Contact Share Function updates the subscription list by clearing the contact entry based on local policy.

If the determination is made at block 262 that the recipient is not in the local domain, but rather in a remote domain, the Contact Share Function may use SIP MESSAGE or SIP INVITE and MSRP method to deliver the Contact Share content to the remote domain. Reference may be made to Figure 5 for an exemplary information flow for this case. The remote domain may then follow the above-described procedure to deliver the Contact Share to the intended recipient.

In various embodiments, the contact whose information is shared may not maintain the PCC. Thus, it is safe to include the contact information to be shared within the SIP MESSAGE so that the information can be pushed to the Subscription Function of the recipient, as described above. In this case, the recipient Subscription Function does not need to fetch the contact information from the PCC server.

Alternatively, a messaging service (e.g., SMS, MMS, IM, e-mail) or a suitable transport protocol (e.g., SIP MESSAGE method) may be used to send the contact information to the recipient. In this case, the contact information would be delivered to recipient's user equipment (UE), and there is no responsibility of the remote domain as such. Upon receiving the contact information, the UE may store it in the local address book, and the information may be propagated to the network-based address book repository upon synchronization of the address book between the UE and the network-based repository.

Contact information of multiple contacts may be easily encoded within multipart/mixed or multipart/related MIME objects. An image or an icon may also be embedded or referred from a MIME multipart/related object. Both MMS and E-mail support MIME encoding. E-mail would be a useful transport, when contact information is sent to an e-mail address, though MMS may be also used to send information to an e-mail address. Instant Messaging (IM) may also be used, particularly if the recipient address is an IM address (e.g. SIP URL).

In accordance with embodiments of the present invention, upon receiving a message (e.g., SMS, MMS, e-mail, IM), the recipient terminal decodes the message and automatically looks at the content of the message. If the recipient terminal finds that the content of the message is contact information, it informs the recipient user that contact information has been received and asks the recipient user for permission to save the contact information in her address book. In some embodiments, the recipient device can store the contact information directly to the address book if the recipient terminal has been accordingly configured by the user or service provider.

Upon storing the contact information in the local copy of the address book of the recipient terminal, the recipient terminal may start synchronization of the address book with the network-based master copy of the address book, if there is a such network-based address book. Upon the update in the network-based address book with the received contact information, the local copy of the address book in other possible devices owned by the same recipient user would be eventually updated by follow-up synchronization process.

In some embodiments, with reference to Figure 1, the Contact Share Function 214 and the Subscription Function 206 may be combined since both need to support both subscription/notification and other XDM operations. In this case, retrieval of contact information by the Contact Share Function 214 from the Subscription Function 206 may not be required. In other embodiments, the Contact Share Function 214 may be combined with the CAB Server 202, the PCC Server 204 or any other server/proxy. Similarly, in some embodiments, the various XML documents described above as residing in the UPP XDMS may reside in any XDMS.

In accordance with various embodiments of the present invention, as noted above, the recipient terminal may be configured to decode a received message and determine if the content of the message includes contact information. In some embodiments, if the message is MIME encoded, the value of the MIME Content-Type header can directly indicate if the content is contact information. For example, if the value is text/x-vCard or application/directory, it implies that the content is contact information. In some embodiments, the header may have some generic value (e.g., text/plain), or the message may not be MIME encoded (e.g., in case of SMS). In these cases, the recipient terminal may still understand from the specifics of the content if contact information is included in the message. For example, the vCard format always begins and ends with BEGIN and END type with VCARD as the value.

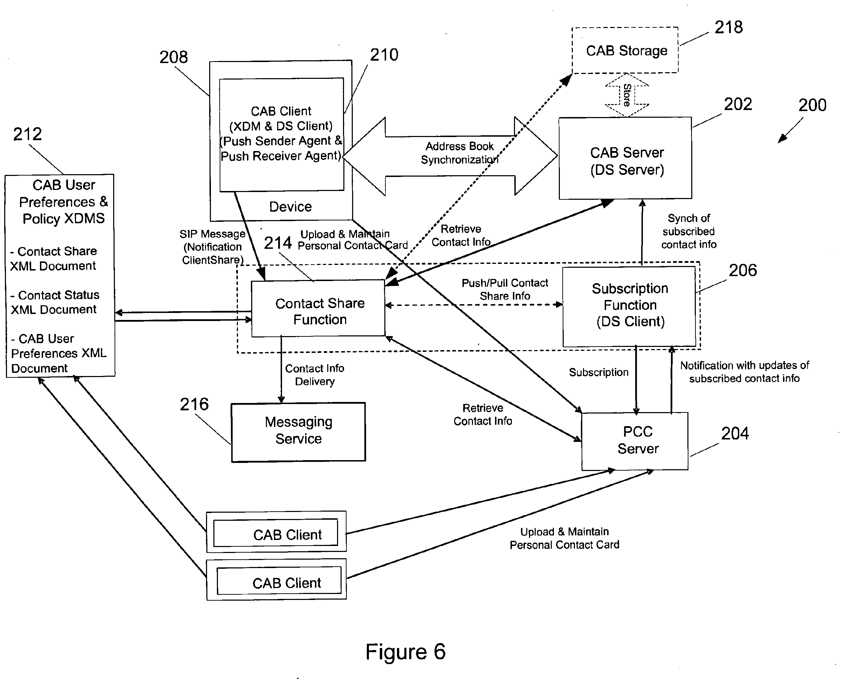

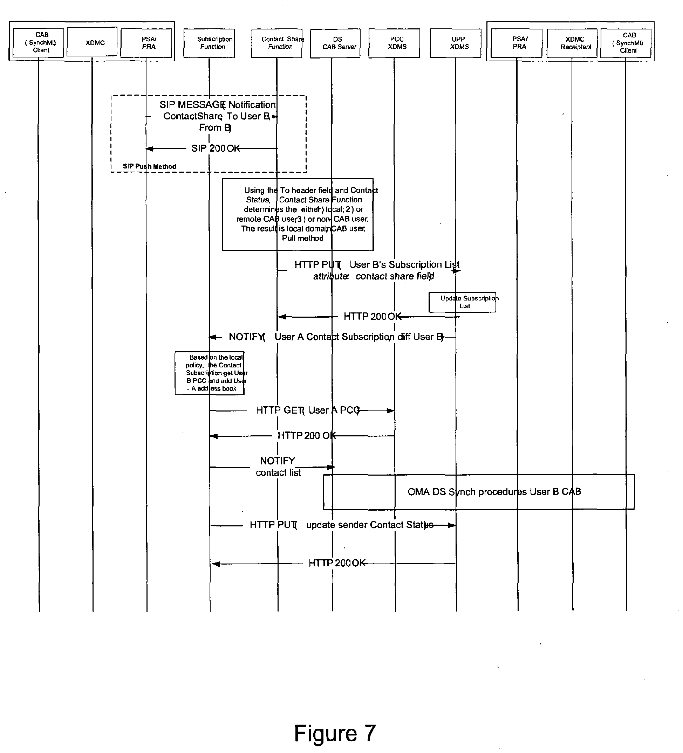

Referring now to Figures 6 and 7, a process for sharing contact information in accordance with another embodiment of the present invention is illustrated. Figure 6 illustrates an exemplary architecture and flow of an address book management system according to another embodiment of the present invention is schematically illustrated.

The address book update system 200 of Figure 6 includes similar components to those illustrated in the embodiment of Figure 1. In the embodiment illustrated in Figure 6, the user device 208 is provided with functionality of Session Initiation Protocol (SIP) Push capability. For details on SIP Push capability, reference may be made to OMA-TS-SIP_Push-V1_0-20080829-D.

Thus, in accordance with the embodiment of Figure 6, rather than updating a Contact Share document via XDM capability, the user device uses the SIP Push capability to send an SIP message to the Contact Share function 214. Figure 7 illustrates an exemplary information flow for the case using the SIP Push capability.

In accordance with the embodiment of Figures 6 and 7, when a user (e.g., CAB client) wishes to share his own contact information or the contact information of someone else from his own address book, the user uses the SIP Push Sender Agent to send a Contact Share Notification to the Contact Share Function 214. In this regard, in certain embodiments, a SIP message may be used for the notification. In other embodiments, a SIP Invite and Message Session Relay Protocol (MSRP) may be used.

Thus, the Contact Share Function receives a notification of the pending or new Contact Share request. The notification includes the content of the Contact Share request. Once the Contact Share Function receives the notification, the information flow may be similar to that described above with reference to Figures 1-5.

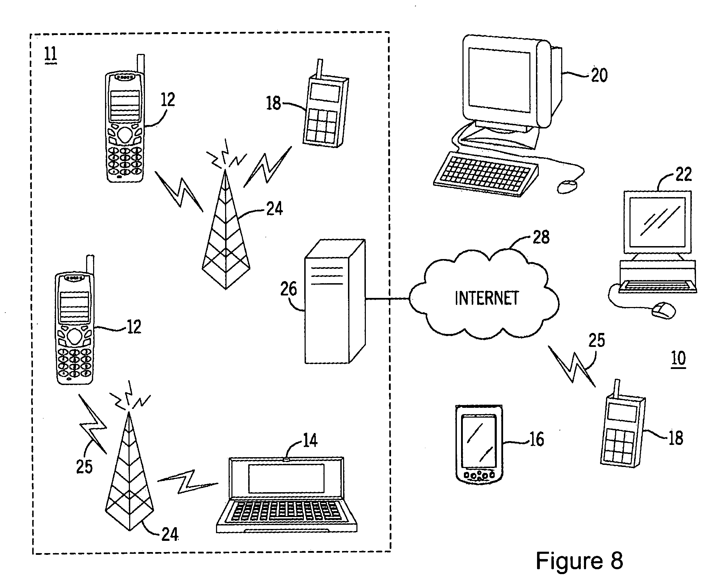

Figure 8 shows a system 10 in which various embodiments of the present invention can be utilized, comprising multiple communication devices that can communicate through one or more networks. The system 10 may comprise any combination of wired or wireless networks including, but not limited to, a mobile telephone network, a wireless Local Area Network (LAN), a Bluetooth personal area network, an Ethernet LAN, a token ring LAN, a wide area network, the Internet, etc. The system 10 may include both wired and wireless communication devices.

For exemplification, the system 10 shown in Figure 8 includes a mobile telephone network 11 and the Internet 28. Connectivity to the Internet 28 may include, but is not limited to, long range wireless connections, short range wireless connections, and various wired connections including, but not limited to, telephone lines, cable lines, power lines, and the like.

The example communication devices of the system 10 may include, but are not limited to, an electronic device 12 in the form of a mobile telephone, a combination personal digital assistant (PDA) and mobile telephone 14, a PDA 16, an integrated messaging device (IMD) 18, a desktop computer 20, a notebook computer 22, etc. The communication devices may be stationary or mobile as when carried by an individual who is moving. The communication devices may also be located in a mode of transportation including, but not limited to, an automobile, a truck, a taxi, a bus, a train, a boat, an airplane, a bicycle, a motorcycle, etc. Some or all of the communication devices may send and receive calls and messages and communicate with service providers through a wireless connection 25 to a base station 24. The base station 24 may be connected to a network server 26 that allows communication between the mobile telephone network 11 and the Internet 28. The system 10 may include additional communication devices and communication devices of different types.

The communication devices may communicate using various transmission technologies including, but not limited to, Code Division Multiple Access (CDMA), Global System for Mobile Communications (GSM), Universal Mobile Telecommunications System (UMTS), Time Division Multiple Access (TDMA), Frequency Division Multiple Access (FDMA), Transmission Control Protocol/Internet Protocol (TCP/IP), Short Messaging Service (SMS), Multimedia Messaging Service (MMS), e-mail, Instant Messaging Service (IMS), Bluetooth, IEEE 802.11, etc. A communication device involved in implementing various embodiments of the present invention may communicate using various media including, but not limited to, radio, infrared, laser, cable connection, and the like.

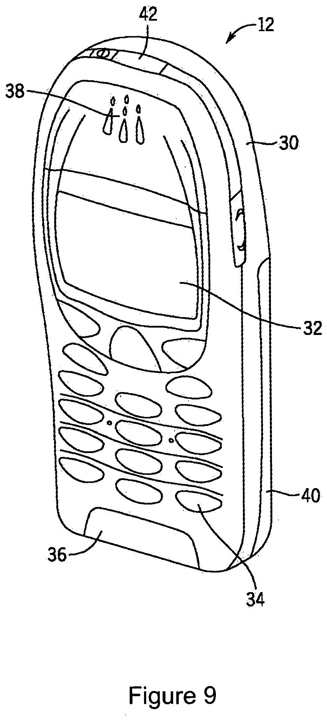

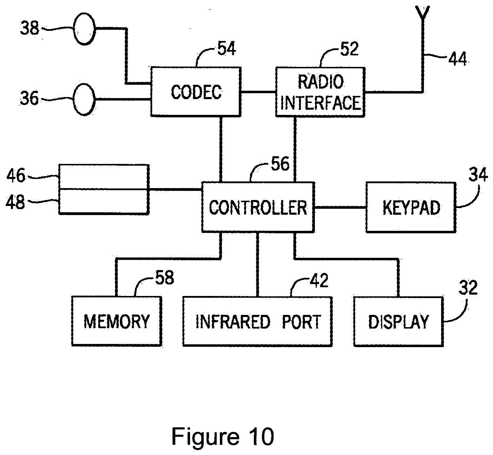

Figures 9 and 10 show one representative electronic device 28, which may be used as a network node in accordance to the various embodiments of the present invention. It should be understood, however, that the scope of the present invention is not intended to be limited to one particular type of device. The electronic device 28 of Figures 9 and 10 includes a housing 30, a display 32 in the form of a liquid crystal display, a keypad 34, a microphone 36, an ear-piece 38, a battery 40, an infrared port 42, an antenna 44, a smart card 46 in the form of a UICC according to one embodiment, a card reader 48, radio interface circuitry 52, codec circuitry 54, a controller 56 and a memory 58. The above described components enable the electronic device 28 to send/receive various messages to/from other devices that may reside on a network in accordance with the various embodiments of the present invention. Individual circuits and elements are all of a type well known in the art, for example in the Nokia range of mobile telephones.

Various embodiments described herein are described in the general context of method steps or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Embodiments of the present invention may be implemented in software, hardware, application logic or a combination of software, hardware and application logic. The software, application logic and/or hardware may reside, for example, on a chipset, a mobile device, a desktop, a laptop or a server. Software and web implementations of various embodiments can be accomplished with standard programming techniques with rule-based logic and other logic to accomplish various database searching steps or processes, correlation steps or processes, comparison steps or processes and decision steps or processes. Various embodiments may also be fully or partially implemented within network elements or modules. It should be noted that the words "component" and "module," as used herein and in the following claims, is intended to encompass implementations using one or more lines of software code, and/or hardware implementations, and/or equipment for receiving manual inputs.

The foregoing description of embodiments has been presented for purposes of illustration and description. The foregoing description is not intended to be exhaustive or to limit embodiments of the present invention to the precise form disclosed, and modifications and variations are possible in light of the above teachings or may be acquired from practice of various embodiments. The embodiments discussed herein were chosen and described in order to explain the principles and the nature of various embodiments and its practical application to enable one skilled in the art to utilize the present invention in various embodiments and with various modifications as are suited to the particular use contemplated. The features of the embodiments described herein may be combined in all possible combinations of methods, apparatus, modules, systems, and computer program products.

## Claims

1. A method, **characterized in** comprising:
receiving (254), at an apparatus (214), by a computer code included in a memory unit communicatively connected to a processor, a notification to share contact information for a contact in an address book of a sender with a recipient, the notification including an address for the recipient, an address for the sender and a pointer to the contact information to be shared, the receiving of the notification being in response to an update to a contact share document (212);
retrieving (256) the contact information for the contact from a personal contact card server (204) or a network repository of address book (218, 202) by a computer code included in the memory unit;
causing (264, 266) delivery of the contact information to the recipient by a computer code included in the memory unit; and
updating (268) a contact share status upon successful delivery of the contact information to the recipient by a computer code included in the memory unit, wherein the updating of the contact share status includes updating an XML Document Management document, wherein the updating of the XML Document Management document includes updating a recipient subscription list with a contact share flag.

2. The method of claim 1, wherein the contact share document is an XML Document Management document.

3. The method of claims 1 or 2, wherein the receiving (254) a notification includes receiving a Session Initiation Protocol, SIP, Push message.

4. The method of claim 1, further comprising: sending a notification to the sender when the subscription list XML document is updated.

5. The method of any of claims 1 to 4, wherein the causing (264, 266) delivery of the contact information includes transporting (264) the contact information to a remote domain.

6. The method of claim 1 further comprising: receiving a reject or accept from the recipient indicating whether the recipient rejects or accepts the contact information.

7. An apparatus (214), comprising:
a processor; and
a memory unit communicative connected to the processor and including:
computer code for receiving (254), at the apparatus, a notification to share contact information for a contact in an address book of a sender with a recipient, the notification including an address for the recipient, an address for the sender and a pointer to the contact information to be shared, the receiving of the notification being in response to an update to a contact share document (212);
computer code for retrieving (256) the contact information for the contact from a personal contact card server (204) or a network repository of address book (218, 202);
computer code for causing (264, 266) delivery of the contact information to the recipient; and
computer code for updating (268) a contact share status upon successful delivery of the contact information to the recipient, wherein the updating of the contact share status includes updating an XML Document Management document, wherein the updating of the XML Document Management document includes updating a recipient subscription list with a contact share flag.

8. A computer program product, embodied on a computer-readable medium, comprising computer code that when executed performs the method of any of claims 1 to 6.

## Patentansprüche

1. Verfahren, **dadurch gekennzeichnet, dass** es umfasst:
das Empfangen (254), an einer Vorrichtung (214), durch einen in einer mit einem Prozessor kommunikativ verbundenen Speichereinheit enthaltenen Computercode einer Benachrichtigung, Kontaktinformationen für einen Kontakt in einem Adressbuch eines Senders mit einem Empfänger zu teilen, wobei die Benachrichtigung eine Adresse für den Empfänger, eine Adresse für den Sender und einen Zeiger auf die zu teilenden Kontaktinformationen umfasst, wobei das Empfangen der Benachrichtigung als Reaktion auf eine Aktualisierung bezüglich eines Kontaktteilungsdokuments (212) erfolgt;
das Abrufen (256) der Kontaktinformationen für den Kontakt von einem Server (204) persönlicher Kontaktkarten oder einem Netzwerk-Repository des Adressbuchs (218, 202) durch einen in der Speichereinheit enthaltenen Computercode;
das Bewirken (264, 266) des Lieferns der Kontaktinformationen an den Empfänger durch einen in der Speichereinheit enthaltenen Computercode; und
das Aktualisieren (268) eines Kontaktteilungsstatus bei erfolgreicher Lieferung der Kontaktinformationen an den Empfänger durch einen in der Speichereinheit enthaltenen Computercode, wobei das Aktualisieren des Kontaktteilungsstatus das Aktualisieren eines XML-Dokumenten-Management-Dokuments umfasst, wobei das Aktualisieren des XML-Dokumenten-Management-Dokuments das Aktualisieren einer Empfänger-Abonnementliste mit einem Kontaktteilungs-Flag umfasst.

2. Verfahren nach Anspruch 1, wobei das Kontaktteilungsdokument ein XML-Dokumenten-Management-Dokument ist.

3. Verfahren nach Anspruch 1 oder 2, wobei das Empfangen (254) einer Benachrichtigung das Empfangen einer SIP-(Session Initiation Protocol)-Push-Nachricht umfasst.

4. Verfahren nach Anspruch 1, das ferner umfasst:
das Senden einer Benachrichtigung an den Sender, wenn das Abonnementlisten-XML-Dokument aktualisiert ist.

5. Verfahren nach einem der Ansprüche 1 bis 4, wobei das Bewirken (264, 266) des Lieferns der Kontaktinformationen das Transportieren (264) der Kontaktinformationen zu einer entfernten Domäne umfasst.

6. Verfahren nach Anspruch 1, das ferner umfasst:
das Empfangen einer Zurückweisung oder Annahme von dem Empfänger, wobei angezeigt wird, ob der Empfänger die Kontaktinformationen zurückweist oder annimmt.

7. Vorrichtung (214), die aufweist:
einen Prozessor; und
eine Speichereinheit, die mit dem Prozessor kommunikativ verbunden ist und enthält:
Computercode zum Empfangen (254), an der Vorrichtung, einer Benachrichtigung, Kontaktinformationen für einen Kontakt in einem Adressbuch eines Senders mit einem Empfänger zu teilen, wobei die Benachrichtigung eine Adresse für den Empfänger, eine Adresse für den Sender und einen Zeiger auf die zu teilenden Kontaktinformationen umfasst, wobei das Empfangen der Benachrichtigung als Reaktion auf eine Aktualisierung bezüglich eines Kontaktteilungsdokuments (212) erfolgt;
Computercode zum Abrufen (256) der Kontaktinformationen für den Kontakt von einem Server (204) persönlicher Kontaktkarten oder einem Netzwerk-Repository des Adressbuchs (218, 202);
Computercode zum Bewirken (264, 266) des Lieferns der Kontaktinformationen an den Empfänger; und
Computercode zum Aktualisieren (268) eines Kontaktteilungsstatus bei erfolgreicher Lieferung der Kontaktinformationen an den Empfänger, wobei das Aktualisieren des Kontaktteilungsstatus das Aktualisieren eines XML-Dokumenten-Management-Dokuments umfasst, wobei das Aktualisieren des XML-Dokumenten-Management-Dokuments das Aktualisieren einer Empfänger-Abonnementliste mit einem Kontaktteilungs-Flag umfasst.

8. Computerprogrammprodukt, das auf einem computerlesbaren Medium ausgeführt ist, aufweisend Computercode, der bei Ausführung das Verfahren nach einem der Ansprüche 1 bis 6 durchführt.

## Revendications

1. Procédé, **caractérisé en ce qu'**il comprend les étapes suivantes :
recevoir (254), au niveau d'un appareil (214), par un code informatique inclus dans une unité de mémoire connectée de manière communicative à un processeur, une notification pour partager, avec un destinataire, des informations de contact pour un contact dans un carnet d'adresses d'un expéditeur, la notification comprenant une adresse pour le destinataire, une adresse pour l'expéditeur et un pointeur vers les informations de contact à partager, la réception de la notification s'effectuant en réponse à une mise à jour d'un document de partage de contact (212) ;
récupérer (256) les informations de contact pour le contact à partir d'un serveur de cartes de contact personnelles (204) ou d'un répertoire réseau de carnet d'adresses (218, 202) par un code informatique inclus dans l'unité de mémoire ;
causer (264, 266) la délivrance des informations de contact au destinataire au moyen d'un code informatique inclus dans l'unité de mémoire ; et
mettre à jour (268) un statut de partage de contact lors de la délivrance réussie des informations de contact au destinataire par un code informatique inclus dans l'unité de mémoire, où la mise à jour du statut de partage de contact comprend de mettre à jour un document de gestion de documents XML, où la mise à jour du document de gestion de documents XML comprend de mettre à jour une liste d'abonnements de destinataires avec un drapeau de partage de contact.

2. Procédé selon la revendication 1, dans lequel le document de partage de contact est un document de gestion de documents XML.

3. Procédé selon la revendication 1 ou la revendication 2, dans lequel la réception (254) d'une notification comprend de recevoir un message Push de protocole d'ouverture de session, SIP.

4. Procédé selon la revendication 1, comprenant en outre d'envoyer une notification à l'expéditeur lorsque le document XML de liste d'abonnement est mis à jour.

5. Procédé selon l'une quelconque des revendications 1 à 4, dans lequel causer (264, 266) la délivrance des informations de contact comprend de transporter (264) les informations de contact vers un domaine distant.

6. Procédé selon la revendication 1, comprenant en outre de recevoir un rejet ou une acceptation de la part du destinataire indiquant si le destinataire rejette ou accepte les informations de contact.

7. Appareil (214), comprenant :
un processeur ; et
une unité de mémoire communicative connectée au processeur et comprenant :
un code informatique pour recevoir (254), au niveau de l'appareil, une notification pour partager, avec un destinataire, des informations de contact pour un contact dans un carnet d'adresses d'un expéditeur, la notification comprenant une adresse pour le destinataire, une adresse pour l'expéditeur et un pointeur vers les informations de contact à partager, la réception de la notification s'effectuant en réponse à une mise à jour d'un document de partage de contact (212) ;
un code informatique pour récupérer (256) les informations de contact pour le contact à partir d'un serveur de cartes de contact personnelles (204) ou d'un répertoire réseau de carnet d'adresses (218, 202) ;
un code informatique pour causer (264, 266) la délivrance des informations de contact au destinataire ; et
un code informatique pour mettre à jour (268) un statut de partage de contact lors de la délivrance réussie des informations de contact au destinataire, où la mise à jour du statut de partage de contact comprend de mettre à jour un document de gestion de documents XML, où la mise à jour du document de gestion de documents XML comprend de mettre à jour une liste d'abonnements de destinataires avec un drapeau de partage de contact.

8. Produit programme informatique, incorporé sur un support lisible par ordinateur, comprenant un code informatique qui, lorsqu'il est exécuté, exécute le procédé de l'une quelconque des revendications 1 à 6.
